# EUROPEAN PATENT APPLICATION

(11) **EP 2 887 713 A1**
(43) Date of publication of application: **24.06.2015**
(21) Application number: 13005952.0
(22) Date of filing: 19.12.2013
(51) Int. Cl.: H04W 8/24, H04W 72/04

(54) **Methods and devices for providing data to a mobile terminal**

(71) Applicant: Giesecke & Devrient GmbH, 81677 München (DE)
(72) Inventor: Hult, Jorgen, 146 40 Tullinge (SE); Svensson, Britt-Mari, 19251 Sollentuna (SE)

(57) **Abstract**

The invention relates to methods and devices for providing data from a backend system (50) to a mobile terminal (12) that includes a secure element (14) and is configured to communicate with the backend system (50) via a plurality of communication channels, including a mobile communications network (20, 30). The method comprises the following steps: assembling the data to be provided to the mobile terminal (12) by the backend system (50); in a first stage, ranking the available communication channels according to primary ranking criteria related to physical characteristics of the communication channels and selecting the highest ranked channels; in a second stage, ranking the selected communication channels according to secondary ranking criteria which are defined by the operator of the backend system (50), the respective operator of a communication channel or the user of the mobile terminal (12); providing the data from the backend system (50) to the mobile terminal (12) via the highest ranked communication channel.

## Description

### Field of the Invention

The invention relates to mobile communications in general and in particular to methods and devices for providing data to a mobile terminal containing a secure element, such as a subscriber identity module (SIM) or an embedded universal integrated circuit card (eUICC), in a mobile communications system.

### Background of the Invention

Communicating by means of a mobile terminal, such as a mobile phone, via a public land mobile network (PLMN; also referred to as a mobile or cellular communications network herein) operated by a mobile network operator (MNO) generally requires the mobile terminal to be equipped with a secure element for securely storing data uniquely identifying the user of the mobile terminal (also called subscriber). For instance, in the context of a mobile terminal configured to communicate according to the Global System for Mobile Communications (GSM), currently the world's most popular standard for mobile communications systems, the secure element is called a subscriber identity module (SIM) and is usually provided in the form of a smart card. According to the GSM standard, the technical features of which are defined by a large number of interrelated and mutually dependent specifications published by the ETSI standardization organization, the SIM contains subscription credentials for authenticating and identifying the user of the mobile terminal, including in particular an International Mobile Subscriber Identity (IMSI) and an authentication key Ki. These subscription credentials are generally stored on the SIM as part of a subscription profile by the SIM manufacturer/vendor or the MNO during a SIM personalization process prior to providing the user of the mobile terminal with his SIM. A non-personalized SIM is generally not suited for use in a mobile terminal, i.e. using the services provided by a PLMN with a non-personalized SIM without a subscription profile is not possible.

It is known to manage secure elements, such as SIMs, over-the-air (OTA) using standardized protocols carried over SMS (short message service) or IP (Internet protocol) communication channels using an already established connection in a cellular communications network. WO 2010/093312, for instance, describes a method for OTA activation and management of a SIM using an ODA (On Demand Activation) application adapted to activate and manage a SIM after it has been authenticated by the cellular communications network.

It is foreseeable that in the future there will be generally probably several different communication channels available for OTA management of a secure element, i.e. for providing data to a secure element. Consequently, there is a need for methods and devices that allow for a beneficial selection of an optimal communication channel to a secure element.

### Summary of the Invention

The above object is achieved according to the present invention by the subject-matter of the independent claims. Preferred embodiments of the invention are defined in the dependent claims.

According to a first aspect the invention is directed to a method for providing data from a backend system to a mobile terminal that includes a secure element and is configured to communicate with the backend system via a plurality of communication channels, including a mobile communications network. The method comprises the following steps: assembling the data to be provided to the mobile terminal by the backend system; in a first stage, ranking the available communication channels according to primary ranking criteria related to physical characteristics of the communication channels and selecting the highest ranked channels; in a second stage, ranking the selected communication channels according to secondary ranking criteria which are defined by the operator of the backend system, the respective operator of a communication channel or the user of the mobile terminal; providing the data from the backend system to the mobile terminal via the highest ranked communication channel.

Preferably, the data is provided to the mobile terminal via the second highest ranked communication channel, in case the data transmission over the highest ranked communication channel is not successful.

According to preferred embodiments of the invention, the backend system is configured to monitor whether the data has been transmitted successfully to the mobile terminal within a definable time period.

Preferably, the primary ranking criteria comprise the following criteria: the bandwidth of a respective communication channel, the mobile communications network generation, the availability of any transmission error correcting mechanisms on a communication channel, the capability of the mobile terminal to use a specific communication channel, and/ or the technical capabilities of the mobile terminal in general.

According to preferred embodiments of the invention, the secondary ranking criteria comprise the following criteria: the costs for using a certain communication channel, the security mechanisms provided by a given communication channel, maximum allowable data traffic on a communication channel, such as a PLMN, before offloading to a different communication channel, such as a WLAN and/ or restrictions to certain communication channels in case the mobile terminal is roaming.

Preferably, the plurality of communication channels comprises a WLAN, a mobile communications network, Bluetooth, NFC.

According to preferred embodiments of the present invention, the mobile terminal capabilities are stored in a database of the backend system.

Preferably, the data provided to the mobile terminal is subscription data for communicating over a mobile communications network.

According to preferred embodiments of the invention, the respective weighting of the ranking criteria depends on: the type of the data to be transmitted to the mobile terminal, the volume of the data to be transmitted to the mobile terminal, the current location of the mobile terminal and/ or the time of day.

According to a second aspect the invention provides for a mobile terminal including a secure element that has been provided with data according to a method according to the first aspect of the invention.

The mobile terminal according to the present invention comprises means for communicating with a cellular communications network, in order to receive a new subscription profile. Preferably, the mobile terminal is implemented in form of a smart phone, a tablet PC, a notebook, a PDA, or the like. Alternatively the mobile terminal can be a multimedia device such as digital picture frame, audio equipment, a TV system, a set top box, an e-book reader and so on. By way of example, the term "mobile terminal" also includes any kind of machinery, like vending machines, vehicles, smart-meters and the like that are configured to communicate via a cellular communications system in the context of a M2M system.

Preferably, the secure element is a subscriber identity module (SIM) for authentication/ identification of a subscriber in the mobile network. Such a SIM communicates with the mobile terminal via a card reader therein and can be removed in principle from the mobile terminal to be either replaced by a different SIM and/ or used in a different mobile terminal. Alternatively, the secure element is an integral part of the mobile terminal such as a hard-wired chip module. Such embedded secure elements are known, for instance, as embedded Universal Integrated Circuit Cards (eUICCs). Preferably, the secure element supports storage of multiple subscription profiles which may be associated with different MNOs.

According to a third aspect the invention provides for a backend system that is configured to provide data to a mobile terminal according to a method according to the first aspect of the invention.

These and other features, characteristics, advantages, and objects of the invention will be clear from the following detailed description of preferred embodiments, given as a non-restrictive example, under reference to the attached drawings. The person skilled in the art will appreciate, in particular, that the above preferred embodiments can be combined in several ways, which will result in additional advantageous embodiments that are explicitly supported and covered by the present invention. In particular, the person skilled in the art will appreciate that the above described preferred embodiments can be implemented in the context of the different aspects of the invention.

### Brief description of the drawings

- Fig. 1: shows a schematic overview of a mobile communications system illustrating different aspects of the present invention; and
- Fig. 2: shows a diagram illustrating a method for providing data from a data providing unit to the secure element of a mobile terminal according to a preferred embodiment of the invention.

### Detailed description of preferred embodiments

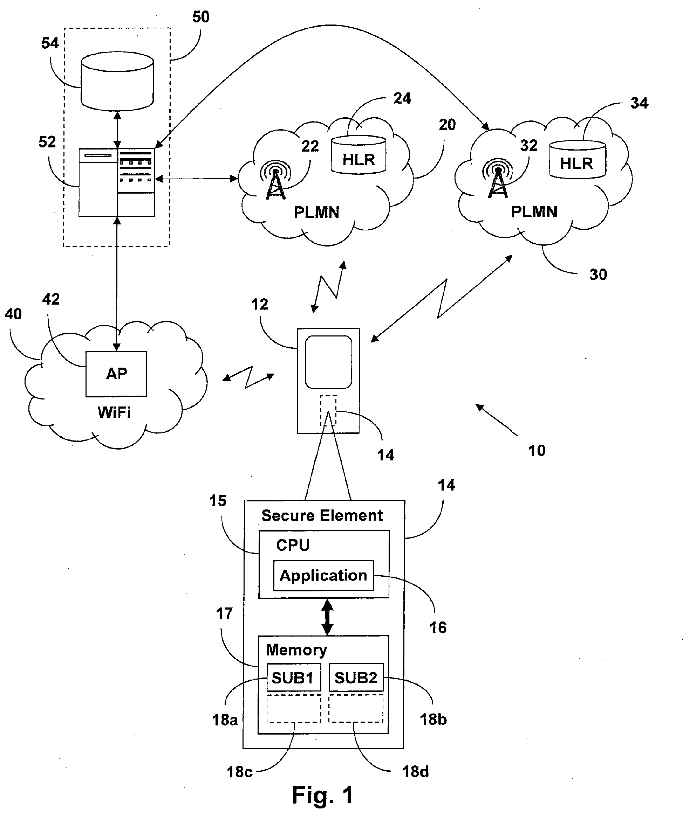

Figure 1 shows schematically the components of a communications system 10 as well as some of the communication channels or links between the components of this system 10 that illustrate different aspects of the present invention. Although the below detailed description will refer to a "mobile" terminal, the person skilled in the art will appreciate that the present invention can be advantageously implemented in the context of any kind of terminal that is configured to communicate via a mobile or cellular communications network. In other words, the attribute "mobile" used herein refers to the ability of a terminal to communicate via a mobile or cellular communications network (or short mobile network).

An exemplary mobile terminal 12 is shown in figure 1 including a secure element 14 for securely storing and processing data that uniquely identifies the mobile terminal 12 and/or its user, i.e. the subscriber. As indicated in figure 1, the mobile terminal 12 preferably is a mobile phone, smart phone or a similar device. The person skilled in the art will appreciate, however, that the mobile terminal 12 according to the present invention can be implemented in the form of other devices as well, such as a tablet or notebook computer, a TV system, a set top box, a vending machine, a vehicle, a smart metering device, a surveillance camera, a sensor device and the like.

According to preferred embodiments of the invention the secure element 14 is configured as an eUICC with a SIM application running thereon, i.e. a secure element that can be mounted in the mobile terminal 12 and used in cellular communications systems for unique and secure subscriber identification as well as for the provision of different special functions and value-added services. Alternatively, the secure element 14 could be configured as a removable subscriber identity module (SIM), the SIM currently being the most popular type of secure element. The person skilled in the art will appreciate, however, that other types of secure elements that, depending on the underlying generation and type of cellular communications system standard, are designated as UICC, USIM, R-UIM, ISIM and the like, are also encompassed by the present invention. Moreover, the secure element 14 could be a M2M module or a Trusted Execution Environment (TEE) implemented as part of the mobile terminal 12.

According to the present invention, the mobile terminal 12 is configured to communicate with a backend system 50 via a plurality of communication channels. The backend system 50 is configured to provide data via these different communication channels to the mobile terminal 12 and its secure element 14 as well as to receive data therefrom. Preferably, the backend system 50 comprises a file server 52 and a database 54, as will be described in more detail further below.

According to preferred embodiments of the present invention, the mobile terminal 12 is configured to communicate with the backend system 50 via a first cellular or mobile communications network 20 (also referred to as public land mobile network (PLMN) 20) or a second cellular or mobile communications network 30 (also referred to as public land mobile network (PLMN) 30). Preferably, the first PLMN 20 is operated by a first mobile network operator (MNO) and the second PLMN 30 is operated by a second mobile network operator (MNO). According to preferred embodiments of the invention the first PLMN 20 and/ or the second PLMN 30 are operated according to the GSM standard.

In the following, preferred embodiments of the invention will be described in the context of cellular or mobile communications networks according to the standards of the Global System for Mobile communication (GSM), as specified in a number of specifications provided by ETSI. However, the person skilled in the art will appreciate that the present invention may be advantageously applied in connection with other cellular communications systems as well. Such systems include third-generation cellular communications systems (3GPP), such as the Universal Mobile Telecommunications System (UMTS), and next generation or fourth-generation mobile networks (4G), such as Long Term Evolution (LTE), as well as other cellular communications systems.

As is well known to the person skilled in the art, a PLMN configured according to the GSM standard generally comprises a base station subsystem consisting of one or more base transceiver stations that define respective cells of the PLMN and are connected to a base station controller. Generally, the base station controller is one of several base station controllers that communicate with a common mobile switching center (MSC). Often, a local database called Visitor Location Register (VLR) for keeping track of the mobile users currently located within the cells covered by a MSC (i.e. the MSC service area) is incorporated in the MSC. The MSC provides essentially the same functionality as a central office switch in a public-switched telephone network and is additionally responsible for call processing, mobility management, and radio resource management. The MSC is further in communication with a home location register (HLR), which is the primary database of the PLMN that stores information about its mobile users required for authentication. To this end, the HLR generally is in communication with an authentication center (AUC). The person skilled in the art will appreciate that although the above described components of a conventional GSM system may have different names in different or consecutive standards for mobile communications networks, the underlying principles used therein are substantially similar and, therefore, compatible with the present invention.

As is known to the person skilled in the art, the communication means between the above described components of a PLMN may be proprietary or may use open standards. The protocols may be SS7 or IP-based. SS7 is a global standard for telecommunications defined by the International Telecommunication Union (ITU) Telecommunication Standardization Sector (ITU-T). The standard defines the procedures and the protocols by which network elements in the public switched telephone network (PSTN) exchange information over a digital signaling network to effect wireless (cellular) and wired call setup, routing and control. The SS7 network and protocol are used for e.g. basic call setup, management, wireless services, wireless roaming, and mobile subscriber authentication, i.e. enhanced call features providing for efficient and secure worldwide telecommunications. How the network elements are grouped or left separate and the interfaces - whether proprietary or open - between these elements are left to the MNO.

Of the above described components of a PLMN only the following ones are shown in the schematic drawing of figure 1 for ease of explanation: an exemplary base transceiver station 22 and a HLR 24 for the first PLMN 20 as well as an exemplary base transceiver station 32 and a HLR 34 for the second PLMN 30. As already mentioned above, the first PLMN 20 and the second PLMN 30 are each at least in temporary communication with the backend system 50, preferably its file server 52. The first PLMN 20 and/or the second PLMN 30 moreover could each comprise a SMS-C (Short Message Service Center) for storing, forwarding, converting and delivering SMS messages to the secure element 14, which constitutes another communication channel to the mobile terminal 12 and its secure element 14 according to preferred embodiments of the present invention.

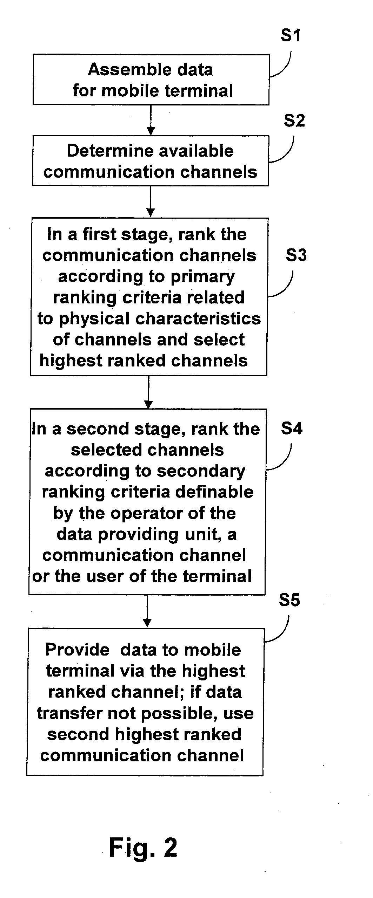

As can be taken from the enlarged view of the secure element 14 in figure 1, the secure element 14 preferably comprises a central processing unit (CPU) 15. Preferably, the CPU 15 is configured such that at least one application 16 can be executed on the CPU 15, preferably providing for some of the features that will be described in the context of figure 2 in more detail further below. The application 16 could be implemented, for instance, as a Java Applet. For providing an execution environment for the application 16 a secure element operating system (not shown in figure 1) is preferably implemented on the CPU 15.

Moreover, the secure element 14 preferably comprises a memory unit 17, which preferably is implemented as a non-volatile, rewritable memory unity, e.g., a flash memory. In the context of the preferred embodiment shown in figure 1 a first subscription profile (SUB1) 18a and a second subscription profile (SUB2) 18b are stored in the memory unit 17 of the secure element 14. This first and second subscription profiles 18a and 18b each comprise data that allow the secure element 14 and the mobile terminal 12 to attach to the first PLMN 20 and the second PLMN 30, respectively, i.e. data, such as subscription credentials, a MNO specific authentication algorithm, and the like. Preferably, at least parts of the memory unit 17 of the secure element 14 are configured to securely store the data therein, for instance any subscription credentials to be kept secret, such as an International Mobile Subscriber Identity (IMSI) and/ or an authentication key Ki, that are part of the first or second subscription profiles 18a and 18b. As indicated by means of the dashed boxes in figure 1, the memory unit 17 preferably provides additional "slots" for accommodating additional subscription profiles, such as a third and a fourth subscription profile 18c and 18d, which could be provided from the backend system 50 to the secure element 14 according to the methods of the present invention that will be described in the context of figure 2 in more detail further below.

For instance, the first subscription profile 18a could have been stored in the memory unit 17 of the secure element 14 during the manufacturing and/ or personalization process of the mobile terminal 12 and/ or its secure element 14. It is conceivable that the first subscription profile 18a is merely a provisional subscription profile only providing for basic services that allow the secure element 14 and mobile terminal 12 to communicate with the backend system 50 via the first PLMN 20 and to download a more complete subscription profile providing for additional services. As a provisional subscription profile generally provides only a limited functionality, the user of the mobile terminal 12 generally will be enticed to change to a more complete subscription profile providing for additional services.

According to preferred embodiments of the present invention, the mobile terminal 12 and its secure element 14 are, moreover, configured to communicate with the backend system 50 via a WLAN 40 (also called WiFI network). To this end, the mobile terminal, preferably, comprises a WLAN module configured to establish a communication link between the mobile terminal 12 and an access point 42 (also called base station) of the WLAN 40. Preferably, the WLAN 40 established by the access point 42 is an IEEE 802.11 WLAN, i.e. a WLAN configured according to the standard IEEE 802.11 and/ or one or more of its sub-standards, such as IEEE 802.11b, 802.11a, 802.11g, 802.11i, 802.11n, and 802.11ac (such WLANs are also known as WiFi networks). Alternatively, the WLAN 40 could be a wireless LAN operated according to the Bluetooth standard (IEEE 802.15.1) or the WiMAX standard (IEEE 802.16). All of these constitute communication channels to the mobile terminal 12 and its secure element 14 according to preferred embodiments of the present invention.

A preferred mode of operation of the backend system 50 in combination with the other elements of the communications system 10 shown in figure 1 will now be described in the context of a preferred embodiment of the invention under further reference to figure 2. A possible scenario could be, for instance, that the user of the mobile terminal 12 of figure 1 wants to download a new subscription from the backend system 50 over one of the available communication channels shown in figure 1, i.e. the first mobile network 20, the second mobile network 30 and/ or the WLAN 40.

In step S1 of figure 2, the backend system 50 assembles the data to be provided to the mobile terminal 12. The data assembled in step S1 of figure 1 could be, for instance, a subscription or subscription data that allows the secure element 14 and its mobile terminal 12 to communicate via another mobile communications network (different to the mobile networks 20 and 30), including, in particular, an ISMI and an authentication key Kᵢ for this additional mobile network. In this preferred case, the step S1 of figure 2 could be triggered by the user of the mobile terminal 12 by informing the backend system 50 that he would like to obtain a new subscription. The person skilled in the art, however, will readily appreciate that the present invention can be advantageously used with any other kind of types of data as well, such as image data, music data, video data, and the like.

Once the backend system 50 has assembled the data to be provided to the mobile terminal 12, the backend system 50 determines in step S2 of figure 2 which communication channels are actually available for communicating with the mobile terminal 12. In the context of the preferred example shown in figure 1 the backend system 50 could determine that in a given situation the mobile network 20, the mobile network 30 and the WiFi network 40 are available channels for communicating with the mobile terminal 12 and its secure element 14.

Having determined the actually available communication channels in step S2 of figure 2, the backend system 50 in step S3 of figure 2 ranks these actually available communication channels according to primary ranking criteria. This step can be considered to constitute the first stage of the preferred communication channel ranking or selection process according to the present invention.

Preferably, these primary ranking criteria are related to physical characteristics of the communication channels, the mobile terminal 12 and/ or the secure element 14, such as the physical bandwidth of a respective communication channel, the mobile communications network generation, the availability of any transmission error correcting mechanisms on a communication channel, the capability of the mobile terminal 12 to use a specific communication channel, the technical capabilities of the mobile terminal 12 in general. For instance, a high bandwidth of a communication channel could lead to a high score and a low bandwidth could lead to a low score for a primary ranking criteria relating to the bandwidth of a communication channel. As is well known to the person skilled in the art, the above primary ranking criteria can be combined in several ways to produce a total primary ranking score for a given communication channel, such as by using a weighted sum of the scores for the different primary ranking criteria used.

In order to use the technical capabilities of the mobile terminal 12 as one of the primary ranking criteria the backend system 50 preferably has access to corresponding data. Such data providing for each type of mobile terminal information about the technical capabilities thereof can be preferably stored on the database 54 of the backend system 50.

Having ranked the actually available communication channels according to the above described primary ranking criteria, the backend system 50 preferably defines a subset of the total number of actually available communication channels, for instance, by selecting those communication channels that have a total primary ranking score above a certain threshold or a certain number of communication channels, for instance five communication channels, that have the highest total primary ranking score.

In step S4 of figure 2 the backend system 50 uses the subset of actually available communication channels determined in step S3 of figure 2, i.e. the communication channels having the highest total primary ranking score, to rank the communication channels contained within this subset according to secondary ranking criteria. Preferably, these secondary ranking criteria do not relate to the physical characteristics of a communication channel, but rather to "soft" criteria that are generally defined by the operator of the backend system 50, the respective operator of a given communication channel or the user of the mobile terminal 12, such as the costs for using a certain communication channel, the security provided by a given communication channel. Additional soft criteria can be based on the following considerations. For instance, one mobile network operator (MNO) may consider "roaming costs" top priority, while another considers "delivery success rate" as top priority. Another MNO may consider data offload to a WiFi network most important for certain data types in order to avoid his mobile network being under a heavy load by too much traffic. For security reasons a MNO may place a high priority on security mechanisms and/ or reliability of provisioning sensitive subscription data over SMS.

In step S5 of figure 2 the backend system 50 attempts to provide the data to the mobile terminal 12 and its secure element 14 via the highest ranked communication channel. In case the data transmission over the highest ranked communication channel for whatever reason is not successful, the backend system 50 preferably attempts to transmit this data over the second highest ranked communication channel and so on, until the data transmission has been successful. To this end, according to preferred embodiments of the invention, the backend system 50 is configured to monitor whether the data has been transmitted successfully to the mobile terminal 12 within a definable time period. If this is not the case, the backend system 50 will try to transmit the data to the mobile terminal 12 within another definable time period via the communication channel having the next highest rank and so on.

In the context of the preferred example shown in figure 1 the backend system 50 could, for instance, try first to transmit the data to the mobile terminal 12 via the mobile network 20 (e.g. a preferred roaming partner network), and, if this is not successful, try the mobile network 30 next (which might be more expensive and, thus, was ranked lower than the mobile network 20). According to preferred embodiments of the invention, how the primary ranking criteria and/ or the secondary ranking criteria are respectively weighted to result in a total ranking criteria can be defined by the operator of the backend system 50, the operator of a communication channel (e.g. a mobile network operator) and/ or the user of the mobile terminal 12. For instance, one mobile network operator (MNO) may consider "roaming costs" top priority, while another considers "delivery success rate" as top priority. Another MNO may consider data offload to a WiFi network most important for certain data types in order to avoid his mobile network being under a heavy load by too much traffic. For security reasons a MNO may place a high priority on security mechanisms and/or reliability of provisioning sensitive subscription data over SMS.

Moreover, according to preferred embodiments of the invention the different weights of the criteria leading to the ranking could depend on other factors, such as the volume or the type of the data to be transferred to the mobile terminal 12, the current location of the mobile terminal 12, the time of day and the like. For instance, a mobile communication network that enjoys a lot of traffic during daytime, but less traffic during the night, according to preferred embodiments of the present invention could achieve a higher rank (i.e. be more preferred) during the night, than during daytime.

In light of the above detailed description the person skilled in the art will appreciate that modifications and/ or additions can be made to the methods and devices as described heretofore, which are to be considered to remain within the scope of the present invention as defined by the appended claims.

## Claims

1. Method of providing data from a backend system (50) to a mobile terminal (12) that includes a secure element (14) and is configured to communicate with the backend system (50) via a plurality of communication channels, including a mobile communications network (20,30), wherein the method comprises the following steps:
assembling the data to be provided to the mobile terminal (12) by the backend system (50);
in a first stage, ranking the available communication channels according to primary ranking criteria related to physical characteristics of the communication channels and selecting the highest ranked channels;
in a second stage, ranking the selected communication channels according to secondary ranking criteria which are defined by the operator of the backend system, the respective operator of a communication channel or the user of the mobile terminal (12);
providing the data from the backend system (50) to the mobile terminal (12) via the highest ranked communication channel.

2. The method of claim 1, wherein the data is provided to the mobile terminal (12) via the second highest ranked communication channel, in case the data transmission over the highest ranked communication channel is not successful.

3. The method of claim 2, wherein the backend system (50) is configured to monitor whether the data has been transmitted successfully to the mobile terminal (12) within a definable time period.

4. The method of claim 1, wherein the primary ranking criteria comprise the following criteria: the bandwidth of a respective communication channel, the mobile communications network generation, the availability of any transmission error correcting mechanisms on a communication channel, the capability of the mobile terminal (12) to use a specific communication channel, and/ or the technical capabilities of the mobile terminal (12) in general.

5. The method of claim 1, wherein the secondary ranking criteria comprise the following criteria: the costs for using a certain communication channel, the security mechanisms provided by a given communication channel, maximum allowable data traffic on a communication channel, such as a PLMN, before offloading to a different communication channel, such as a WLAN and/or restrictions to certain communication channels in case the mobile terminal (12) is roaming.

6. The method of claim 1, wherein the communication channels comprise a WLAN, a mobile communications network, Bluetooth, NFC.

7. The method of claim 1, wherein the mobile terminal capabilities are stored in a database (54) of the backend system (50).

8. The method of claim 1, wherein the data provided to the mobile terminal (12) is subscription data for communicating over a mobile communications network.

9. The method of claim 1, wherein the respective weighting of the ranking criteria depends on: the type of the data to be transmitted to the mobile terminal (12), the volume of the data to be transmitted to the mobile terminal (12), the current location of the mobile terminal (12) and/or the time of day.

10. A backend system (50) that is configured to provide data to a mobile terminal (12) according to a method of anyone of the preceding claims.

11. A mobile terminal (12) that has been provided with data according to a method of anyone of claims 1 to 9.
